# EUROPEAN PATENT SPECIFICATION

(11) **EP 4 179 262 B1**
(45) Date of publication and mention of the grant of the patent: **10.09.2025**
(21) Application number: 21752161.6
(22) Date of filing: 08.07.2021
(51) Int. Cl.: F24F 11/30, F24F 11/64, F24F 11/63, F24F 11/58

(54) **CONTROL DEVICE AND METHOD FOR CONTROLLING PERSONAL ENVIRONMENTAL COMFORT**
STEUERUNGSVORRICHTUNG UND VERFAHREN ZUR STEUERUNG DES PERSÖNLICHEN UMGEBUNGSKOMFORTS
DISPOSITIF ET PROCÉDÉ DE COMMANDE POUR COMMANDER LE CONFORT ENVIRONNEMENTAL PERSONNEL

(30) Priority: 10.07.2020 BE 202005515
(43) Date of publication of application: 17.05.2023
(73) Proprietor: Renson NV, 8790 Waregem (BE)
(72) Inventor: VANDEKERCKHOVE, Steven, 8500 Kortrijk (BE)
(74) Representative: IP HILLS NV
(86) International application number: PCT/IB2021/056116
(87) International publication number: WO 2022/009128

(56) References cited:
- WO-A1-2016/025802
- US-A1- 2019 032 948
- US-A1- 2019 234 642
- US-B1- 10 253 995
- US-B1- 10 443 873
- US-B1- 9 696 055

## Description

### Technical Field

The present invention relates to controlling personal environmental comfort in a building comprising one or more rooms, equipped with a comfort system. More specifically, this invention relates to a device and a computer-implemented method for recurrently controlling personal environmental comfort for one or more users of the building.

### Prior Art

There are various types of ventilation systems which make it possible to ventilate one or more rooms in a building. Thus, a distinction is made between ventilation systems with natural supply and mechanical discharge of air, also referred to as C systems in Belgium and the Netherlands, and ventilation systems with mechanical supply and mechanical discharge of air, also referred to as D systems in Belgium and the Netherlands, and always combined with heat recovery in practice. These two systems may be designed as both centralized and decentralized systems, optionally demand-driven. The centralized embodiment comprises one ventilator which extracts the air from several rooms. The decentralized embodiment comprises several ventilators which each have a separate discharge duct and which are individually adjustable in order to regulate the extraction of air for each room individually. In a ventilation system with natural supply and mechanical discharge, air is discharged from the building actively, but the supply of air takes place passively. To this end, windows may for example be provided with air vents or tilt windows which are in communication with the open air. By means of air ducts and air vents, one or more ventilation motors extract air from spaces in the building which have to be ventilated, typically humid spaces, such as for example the kitchen, the bathroom and the toilet in a dwelling. In a ventilation system with mechanical supply and discharge and with heat/energy recovery, air is actively discharged to the outside and actively supplied from outside via one or more ventilators which are in communication with the spaces which have to be ventilated via supply and discharge ducts. Usually, these are High Efficiency (HE) ventilation systems in which a heat-recovery unit uses the heat from the discharged air to partly heat the air supplied from outside before this supplied air is distributed over the spaces to be ventilated.

In addition to one or more ventilation motors, a centralized or decentralized ventilation system therefore also comprises one or more supply lines and/or discharge lines typically including a valve and/or flow regulator for each supply duct or discharge duct. The ventilation capacity, expressed in cubic meters per hour (m³/h), liters per second (l/s) or liters per hour (l/h), can then be regulated for each of the spaces to be ventilated by adjusting the motor speed, position of the valves and/or flow regulators. The ventilators, valves and flow regulators form the controllable apparatuses of the ventilation system. Other controllable apparatuses, such as air vents, may possibly be present.

Usually, a ventilation system is configured by a fitter using rules and set values before start-up. The set values are for example threshold values for sensor parameters which cause a modification of the ventilator speed, the valve position, or another controllable operational parameter of one of the apparatuses. After start-up, the ventilation system is automatically controlled on the basis of the set rules and measured sensor values. The ventilation system may also be controlled on the basis of manual input by the users of the building in which it is installed. Usually, manual input from users will be given priority over automatic rule-based control, but the system will return to automatic control after a certain amount of time.

American patent application US 2010/0289643 A1, for example, describes a rule-based system that controls the status of one or more energy-consuming apparatuses on the basis of sensor data indicative of the presence of persons. The control system from US 2010/0289643 A1 aims to reduce the energy consumption in buildings without users of the building having to sacrifice comfort through presence detection via sensors.

International patent application WO 2019/018627 A1 describes a control device for environmental parameters in shared rooms such as meeting rooms. The control unit from WO 2019/018627 A1 uses an occupancy schedule for a shared room and persons' preferred settings in order to control the environmental parameters for the shared room according to a weighted average of the preferences of the persons present.

American patent application US 2017/0176030 A1 describes a system that provides a user with a recommendation in relation to the ventilation in a building. On the basis of quality thresholds predefined by the user, measurements of the air quality inside and outside the building, and weather forecasts, the system determines whether the building requires ventilation. The ventilation requirements are shared with the user via electronic messages, who is then expected to follow the recommendations.

The main drawback of the existing rule-based systems that control the ventilation in a building in order to increase the environmental comfort of users of the building is that they are static. Control in such systems takes place on the basis of predefined rules or preconfigured preferred settings from a user. Deviation from the predefined rules and/or preferred settings requires manual intervention from a user who temporarily overrules the predefined rules and/or preferred settings. That does not always result in optimization of comfort for multiple users present in a building or room, and certainly not in optimization of the energy consumption of the ventilation system.

It appears that the above problem is recognized in the literature but concrete technical solutions are yet to be provided. There is a clearly observable trend to better predict which environmental comfort is desired when.

Thus, the article "Sensor-Based Early Activity Recognition Inside Buildings to Support Energy and Comfort Management Systems" by F. Marcello et al. describes the results of a study carried out on the use of sensors to predict activity in a building and to use this information to optimize energy consumption and comfort in the building. The article concludes that activity in a building can be quite accurately predicted using a limited amount of sensor data.

The article "Leveraging Machine Learning and Big Data for Smart Buildings: A Comprehensive Survey" by Basheer Qolomany et al., published in IEEE Access, Volume 7, 2019, concludes that the analysis of large amounts of data and machine-based learning techniques will play a critical role in the future in controlling various apparatuses in smart buildings in order to increase comfort for users of these buildings.

American patent application US 2015/0300892 describes techniques for determining a thermodynamic response model by measuring the response speed of the temperature on activation of or when changes are applied in an HVAC system (heating, ventilation, and air-conditioning system).

Despite the wish to better predict when a certain environmental comfort is desired in a building or room, there is currently no control device for a comfort system of a building that dynamically and recurrently optimizes the environmental comfort for the one or more persons present in the building.

American patent US 10253995 B1 describes a system for mitigating smoke and/or fire damage to an interior of a building. For this, the system from US 10253995 B1 receives signals from a smoke detector or from other sensors and processes these signals. On the basis thereof, the system from US 10253995 B1 decides to turn off an HVAC system (heating, ventilation, and air-conditioning system) and to turn it back on again after a determined time. The determined time after which the HVAC system is turned back on again is a preferred setting from the user.

American patent application US 2019/0032948 A1 describes a control system for a building management system (BMS). The control system that is described in US 2019/0032948 A1 uses both standard rules and rules created by the user. More specifically, US 2019/0032948 A1 describes a server architecture that makes it easier to transfer the user-created rules from one building to another building.

The aim of this invention is therefore to provide a technological solution for controlling a comfort system so that the environmental comfort is recurrently personalized for the one or more users of the building. In addition, the aim of this invention is to describe a control device that recommends measures to the one or more users of a building in order to further optimize personalized environmental comfort, inter alia in terms of energy consumption.

### Summary of the Invention

The invention relates to a control device as claimed in claim 1 for recurrently controlling the personal environmental comfort in a building with one or more rooms equipped with a comfort system, said control device comprising:
- an interface for obtaining sensor data from one or more sensors in said comfort system;
- an interface for obtaining operational data from one or more apparatuses in said comfort system;
- an interface for obtaining external data from one or more sources external to said comfort system;
- a database for storing said sensor data, said operational data and said external data, together referred to as stored data;
- a first machine learning module trained using said stored data in order to generate personal preferred settings per person;
- a second machine learning module trained using said stored data in order to generate predictive models per room and/or per room type, wherein a predictive model models the trend of a sensor datum, an operational datum, an external datum or a preferred setting in a formula that allows a future value thereof to be predicted; and
- a control unit that, on the basis of said preferred settings for one or more persons and/or said predictive models, adjusts one or more settings of one or more apparatuses in said comfort system in order to improve the personal environmental comfort for said one or more persons when present in said building.

The control device according to the invention will thus control personal environmental comfort in a building with a comfort system. A comfort system comprises any system that has an effect on the environmental comfort of a person present in the building. Examples of a comfort system are a ventilation system, a sunblind system, a heating system, an air-conditioning system, a heating, ventilation, and air-conditioning system (HVAC), a heat pump, or a combination thereof. Environmental comfort is a combination of one or more factors that are directly perceptible by the human senses and can be affected by the comfort system, such as temperature, smell (for example from volatile organic compounds), humidity, light intensity, airflow, and/or the sound that, for example, is made by an apparatus from the comfort system or that enters the building through, for example, an air vent or tilt window, but possibly also comprises one or more factors that are instead indirectly perceptible such as particulate matter or carbon dioxide content in the air which, at higher levels over a longer duration, will lead to tiredness or drowsiness in humans. Environmental comfort can be affected by other comfort systems of various types, such as, for example, a ventilation system (controlled or otherwise), a sunblind system (controlled or otherwise), sensors such as temperature sensors, CO₂ sensors, light sensors, RV (rotational vibration) sensors, etc. Environmental comfort is personal because it is not possible to specify one and the same value for everyone. When considering a combination of temperature and humidity, one person might feel comfortable at an ambient temperature of, for example, 25°C and a relative humidity of 60%, while another person will feel just as comfortable at, for example, an ambient temperature 20°C and a relative humidity of 60%.

The control device according to the invention will collect three different types of data and store them in a database for the long term. A first type of data comprises sensor data obtained from one or more sensors in the comfort system that is to be controlled. Sensor data are numerical values for a physical quantity measured by a sensor that forms part of the comfort system, such as, for example, the temperature in a room, humidity, sound intensity, light intensity, particulate matter content, CO₂ content, etc. The numerical values for the physical or chemical parameters can be measured directly by a sensor or determined indirectly from the sensor measurements, for example by using a mathematical formula or correlation. A second type of data comprises operational data from one or more apparatuses from the comfort system. Operational data are current and historical setting values of controllable apparatuses in the comfort system, which are typically stored on the apparatus and thus obtained by the control system from the apparatus itself. Examples of operational data are valve position (expressed as an opening percentage), the capacity of the central ventilator, the average airflow rate per minute of a flow regulator, the state of rotatable slats, the state of a sunshade, etc. The sensor data and operational data are typically stored as a sequence of values as a function of time, for example one value per minute, although a regular interval is not essential. A third type of data comprises external data obtained from one or more sources that do not form part of the comfort system that is to be controlled but which can be associated with the comfort experience of users of the building. Examples thereof are outside temperature, air pressure, outside air quality, sensor data obtained from sensors that do not form part of the comfort system, feedback that is obtained from users of the building, etc. The external sources are then, for example, the Internet of Things (IoT for short), computer programs or applications that ask users for their comfort experience, other apparatuses that have an effect on interior comfort, etc.

The sensor data from one or more sensors from the comfort system, the operational data from one or more apparatuses from the comfort system, and the external data from sources outside the comfort system are stored in a central database for the long term. The central database can be a cloud-based storage system (the management of which is typically provided by a third party, namely the cloud system operator) or the central database can be managed by the manufacturer of the comfort system on dedicated servers. What is meant by long term is that the data are stored for more than 24 hours, preferably several weeks or even several months or years, before the data are regarded as being possibly out of date and are removed from the central database.

The control device according to the invention comprises a first machine learning module, for example a first neural network, which is recurrently trained using the stored long-term data in order to learn the preferred settings of individual users or persons. A preferred setting is a desired value for a parameter (sensor, apparatus, system or environmental parameter) in order to achieve a personal comfort preference in a given situation. The preferred setting is typically a multidimensional reference point indicative of what a given person finds comfortable under certain circumstances. The preferred settings are learnt by the machine learning module per person under certain circumstances. Thus, the first machine learning module learns, for example, that person 1, when they are present alone in the living room between 15:00 and 16:00 on a weekend day in October on which it will rain all day long, wants a temperature of 22.5°C in the living room and wants the bathroom to be warmed up because the person will probably take a shower there within the next half hour. The preferred settings are preferably saved per person and per room, per time interval, per activity, per weather condition, etc. Thus, while a person might have a preferred temperature of 23 degrees for the living room, the same person might have a preferred temperature of 18 degrees for the bedroom. Saving preferred settings per person and per circumstance additionally affords the advantage that, in the event of moving out to another building, the preferred settings of a person can simply be transferred along with them to a control device for a comfort system in the new building. The first machine learning module will be trained so that it can also estimate the personal preferred settings for a person under circumstances that have not yet occurred. The first machine learning module can do this on the basis of similar, but not necessarily identical, data points of the person in question and/or data points of a person who appears to display similar preferences to the person in question.

The control device according to the invention comprises a second machine learning module, for example a second neural network, which is recurrently trained using the stored long-term data in order to generate predictive models, typically per room or per room type. A predictive model is a formula that models the trend of a parameter (sensor, apparatus, system or environmental parameter) or models the trend of a personal preferred setting so that future values of this parameter or preferred setting can be predicted using the formula.

The interfaces for obtaining sensor data or external data will, every time a user of the building adjusts a setting, for example increases the desired temperature in a room on the thermostat, closes the sunblind in a room, etc., capture the surrounding circumstances: the outside temperature, the air quality in the room, the humidity in the room, the time interval, etc. The first machine learning module then learns or generates therefrom the personal preferred settings per person with a view to saving them in a personal profile. The second machine learning module learns or generates therefrom the predictive models that will predict when a person might take a certain action. When similar surrounding circumstances arise, the control unit will, on the basis of the preferred settings of the one or more persons present in the building and on the basis of the predictive models, be able to determine the settings for the controllable apparatuses in the comfort system in order to automatically optimize environmental comfort for the one or more persons present in the building. Controllable apparatuses in the comfort system are, for example, the ventilator motor, valves, flow regulators, air vents, a sunshade, rotatable slats, etc.

The control device according to the invention will thus recurrently adjust the settings of the comfort system and the controllable apparatuses therein in order to optimize personal comfort in a building or room of a building according to the wishes of the users of the building or the room. The control device learns what a person's personal comfort preferences are from their actions, translates this information into personal preference profiles and predictive models which thus evolve with time, and uses the preference profiles and predictive models to dynamically optimize personal environmental comfort.

Embodiments of the control device according to the invention, as defined in claim 2, possibly further comprise:
- a short-term recommendation module configured to generate, on the basis of said preferred settings and said predictive models, a short-term recommendation for an apparatus from said comfort system, for a room from said building, or for said building, wherein said short-term recommendation comprises one or more instructions to adjust said one or more settings of one or more apparatuses within an interval of 24 hours.

The short-term recommendation module will thus use the personal preferred settings and predictive models from the database to make instantaneous recommendations to a user of the building or a user of a room which improve personal comfort for persons who will make use of the building over the short term, short term meaning within a time interval of 24 hours. The short-term recommendation module generates the short-term recommendation on instruction from the control unit. The instantaneous recommendations are instructions to adjust one or more settings which the control unit typically cannot control itself and require manual intervention, such as "open an air vent", "open a tilt window", etc. The short-term recommendation can be delivered to a user of the building in the form of an electronic message, for example an SMS message, an email message, a pop-up message generated by a mobile application on a user's portable apparatus, etc.

Embodiments of the control device according to the invention, as defined in claim 3, possibly further comprise:
- a long-term recommendation module configured to generate, on the basis of said preferred settings and said predictive models, a long-term recommendation for an apparatus from said comfort system, for a room from said building, or for said building.

The long-term recommendation module will thus use the personal preferred settings and predictive models from the database to make recommendations to a user or administrator of the building which can improve personal comfort for persons who use the building over the longer term and/or can reduce the energy consumption of the comfort system over the longer term while maintaining personal comfort for users of the building, long term meaning a term longer than 24 hours. The long-term recommendation module generates the long-term recommendation on instruction from the control unit. The long-term recommendations are typically recommendations for investments with long-term returns, such as, for example, "Install sunshades in room x". This will result in a y EUR reduction in annual energy costs. The return period for the investment is estimated at z years.", etc. The long-term recommendation can be delivered to a user or administrator of the building in the form of an electronic message, for example an SMS message, an email message, a pop-up message generated by a mobile application on a portable apparatus, etc.

Embodiments of the control device according to the invention, as defined in claim 4, possibly further comprise:
- a reminder module, configured to check, via messages, whether said long-term recommendation is being followed.

Such a reminder module will thus check whether said long-term recommendation is being followed by asking a user or the administrator of the building or by analyzing sensor data. The user or administrator can be asked via electronic messages, for example SMS messages, email messages, pop-up messages generated by a mobile application on a portable apparatus, etc. In this way, the control device can find out whether recommended investments have also been implemented effectively and monitor what effect the recommended investments have on the personal preferred settings, the predictive models, the resulting settings for apparatuses in the comfort system, and ultimately the energy consumption of the comfort system.

Embodiments of the control device according to the invention, as defined in claim 5, possibly further comprise:
- a restriction module configured to impose one or more rule-based restrictions on said control unit, wherein a rule-based restriction restricts possible adjustment of said one or more settings of one or more apparatuses in said comfort system.

By virtue of the rule-based restrictions, it can be avoided that the control unit adjusts the settings of the comfort system solely on the basis of personal preferred settings and predictive models such that regulations are contravened or that sensors in the comfort system can no longer perform accurate measurements. After all, the ventilation of buildings or spaces in buildings must comply with country-specific standards and regulations, which may vary substantially. Thus, the maximum capacity of air that is supplied to spaces to be ventilated and/or the maximum capacity of air that is discharged from spaces to be ventilated is defined in national standards. In Belgium, for example, this is the Belgian standard NBN D 50-001, while in the Netherlands this is specified in the Building Code (Bouwbesluit). In France, the "Arrête du 24 mars 1982 relatif à l'aération des logements, version consolidée au 11 mai 2020" applies and, in addition thereto, the Réglementation Thermique RT2012. Depending on the country, various different parameters have to be taken into account to comply with local regulations, such as, for example, in France the type of dwelling (apartment, terraced house, detached house, etc.), the number of floors of the dwelling, the number of rooms in the dwelling, the number of people present in the dwelling, the type of space or room (wet space vs. dry space, bedroom, bathroom, kitchen, etc.), the number of CO₂ particles measured in the air present, the humidity, the air temperature, etc. In addition, the threshold values for the parameters differ from country to country. Thus, for example, in Belgium the ventilation flow should be increased from a threshold value of 900 ppm CO₂ particles, whereas the threshold values to increase the ventilation flow are different in other countries. The rule-based restrictions will thus differ for one and the same type of comfort system depending on the country or the region in which the system is located. The rule-based restrictions imposed by the restriction module will take precedence over the setting adjustments that the control unit determines on the basis of the personal preferred settings and the predictive models.

Embodiments of the control device according to the invention, as defined in claim 6, possibly further comprise:
- an interface for obtaining sensor data indicative of the presence of a given person in a given room or in said building.

So that the control unit can adjust the settings of one or more apparatuses in the comfort system in order to improve personal environmental comfort for users of the building, the control unit has to know which one or more persons are present in the building at any given moment. In one simple embodiment of the control device, this can take place on the basis of assumptions. When a person is present in Steven's bedroom at 22:00, then it can be assumed that this person is Steven. When someone leaves Steven's room at 8:00 in the morning, and the humidity in the bathroom increases at 8:05 because someone is taking a shower, then it can be assumed that the person who is taking a shower and has set the bathroom thermostat at a higher temperature is again Steven. It is thus possible to automatically figure out which one or more persons are present in which room when, for example via artificial intelligence or machine learning. In variant embodiments of the control device according to this invention, use can be made of sensor data, for example presence detectors, motion sensors, or 2D or 3D cameras in the various rooms of the building. Data from a computer program that is run on a portable apparatus - a mobile app - can also be used in embodiments of the control device according to this invention to even more accurately determine which persons are present in which room of a building when.

In embodiments of the control device according to this invention, defined in claim 7, said control unit is configured to adjust, on the basis of the average of preferred settings for multiple persons, one or more settings of one or more apparatuses in said comfort system in order to improve the personal environmental comfort for said multiple persons when present in said building.

When it is detected or assumed that multiple persons are simultaneously present in the building or in a room of the building, the control unit can optimize the environmental comfort for these persons by, for example, taking the average of the preferred settings learnt or generated by the first machine learning module. If it is determined over time that when person X and person Y are present together in one and the same room, the preferred settings correspond better to the preferred settings of person Y, then, in a more advanced embodiment of the invention, it can be chosen over time to go with the preferred settings of person Y instead of averaged settings.

In embodiments of the control device according to this invention, defined in claim 8, said control unit is configured to compare an adjustment of a setting obtained on the basis of said predictive models with a preferred setting and to implement said adjustment only when the difference with respect to said preferred setting exceeds a predefined threshold.

The control unit initially uses the predictive models to determine what will happen in the future if no changes are made to the settings. If this deviates too far from the preferred settings, the control unit will take action and use the predictive models to impose settings that deviate from the preferred settings.

In embodiments of the control device according to this invention, defined in claim 9, said control unit is configured to implement an adjustment of a setting with a delay.

Specifically, to avoid the control device becoming too sensitive and overreacting to every change in the building or in a room of the building, a certain delay parameter can be built into the control unit.

In embodiments of the control device according to this invention, defined in claim 10, said delay is a personal preferred setting.

In certain embodiments of the control device according to this invention, the delay parameter can thus be an adjustable parameter so that the administrator or a user of the building can themselves determine how sensitive the control device is for changes in the building or in a room of the building. After all, some users will prefer a quickly reacting system while others will choose a more slowly reacting system.

In one embodiment of the control device according to the invention, defined in claim 11, said comfort system comprises a ventilation system.

The control device according to the invention will substantially improve personal comfort for users of a building equipped with a ventilation system of any kind. The ventilation system can be equipped with one or more sensors, and can comprise actuable apparatuses such as valves, flow regulators, air vents and one or more motors, optionally combined with manually operable apparatuses such as windows (opened manually for ventilation) or manually operable air vents.

In one embodiment of the control device according to the invention, defined in claim 12, said comfort system comprises a sunblind system.

The control device according to the invention will substantially improve personal comfort for users of a building equipped with a sunblind system of any kind. The sunblind system may be provided with one or more sensors, and may comprise actuable apparatuses such as rotatable slats, a roll of cloth, etc., optionally combined with manually operable apparatuses. A person skilled in the art will understand that the control device according to the invention will be able to substantially improve personal comfort for users of a building equipped with both a ventilation system and a sunblind system.

Furthermore, the invention relates to a computer-implemented method as claimed in claim 13 for recurrently controlling the personal environmental comfort in a building with one or more rooms equipped with a comfort system, said method comprising:
- obtaining sensor data from one or more sensors in said comfort system;
- obtaining operational data from one or more apparatuses in said comfort system;
- obtaining external data from one or more sources external to said comfort system;
- storing said sensor data, said operational data and said external data in a database, said data together referred to as stored data;
- training a first machine learning module using said stored data in order to generate personal preferred settings per person;
- training a second machine learning module using said stored data in order to generate predictive models per room and/or per room type, wherein a predictive model models the trend of a sensor datum, an operational datum, an external datum or a preferred setting in a formula that allows a future value thereof to be predicted;
- adjusting one or more settings of one or more apparatuses in said comfort system on the basis of said preferred settings for one or more persons and/or said predictive models in order to improve the personal environmental comfort for said one or more persons when present in said building.

Furthermore, the invention relates to a computer program product as claimed in claim 14 comprising instructions that can be executed on a computer in order to carry out the following steps, if said program is executed on a computer, for recurrently controlling the personal environmental comfort in a building with one or more rooms equipped with a comfort system:
- obtaining sensor data from one or more sensors in said comfort system;
- obtaining operational data from one or more apparatuses in said comfort system;
- obtaining external data from one or more sources external to said comfort system;
- storing said sensor data, said operational data and said external data in a database, said data together referred to as stored data;
- training a first machine learning module using said stored data in order to generate personal preferred settings per person;
- training a second machine learning module using said stored data in order to generate predictive models per room and/or per room type, wherein a predictive model models the trend of a sensor datum, an operational datum, an external datum or a preferred setting in a formula that allows a future value thereof to be predicted; and
- adjusting one or more settings of one or more apparatuses in said comfort system on the basis of said preferred settings for one or more persons and/or said predictive models in order to improve the personal environmental comfort for said one or more persons when present in said building.

According to a further aspect, the invention relates to a computer-readable storage medium as claimed in claim 15, comprising the computer program product as claimed in claim 14.

### Brief Description of the Drawings

Drawing 1 is a functional block diagram of one embodiment of the control device 100 according to this invention;
Drawing 2 illustrates one embodiment of the method for recurrently controlling the personal environmental comfort in a building according to this invention; and
Drawing 3 shows a computer system suitable for carrying out one or more steps in embodiments of the method according to this invention.

### Description of Embodiments

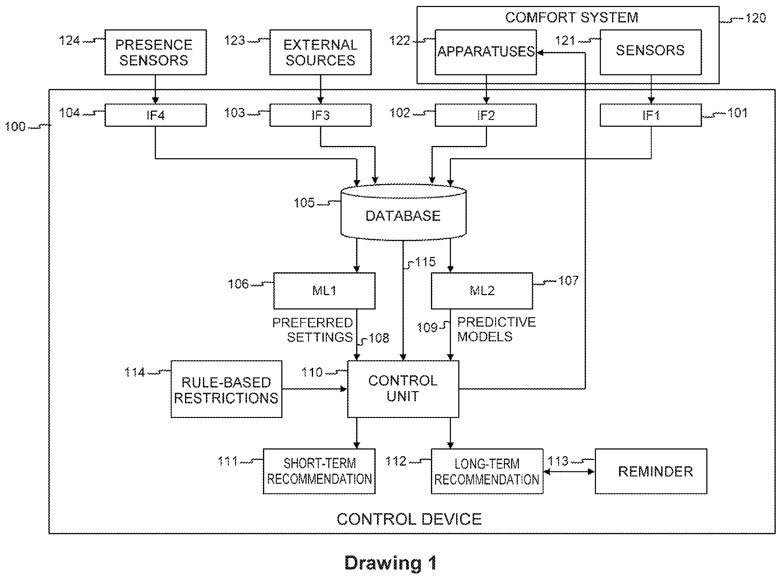

Drawing 1 shows a comfort system 120 with sensors 121 and apparatuses 122. The comfort system 120 is assumed to have been fitted in a building with multiple rooms and was configured or adjusted by a fitter. The apparatuses 122 are controllable apparatuses or components that form part of the comfort system 120 such as one or more ventilation motors, valves, flow regulators, air vents, a sunshade, etc. The sensors 121 also form part of the comfort system and comprise, for example, one or more temperature sensors in the various rooms, one or more humidity sensors in the various rooms, one or more CO₂ sensors in the various rooms, one or more light sensors, etc. Drawing 1 also shows external sources 123 and presence sensors 124 external to the comfort system. The external sources are sensors or other information sources that do not form part of the comfort system, such as, for example, web applications, sensors or other apparatuses that are connected via the Internet and provide weather forecasts or current temperatures. The presence sensors 124 are present in the building in which the comfort system 120 is installed and comprise, for example, infrared (IR) detectors, heat detectors, time-of-flight (TOF) detectors, 2D cameras, 3D cameras, etc., but can also comprise portable apparatuses such as a user's smartphone on which a mobile application is run which tracks the user's location and on the basis thereof reports whether the user is present in the building or is present in a certain room of the building.

Drawing 1 further shows one embodiment of the control device 100 according to the invention. This embodiment 100 comprises a first interface, 101 or IF1, configured to receive sensor data from the sensors 121 of the comfort system 120, a second interface, 102 or IF2, configured to receive operational data from the controllable apparatuses 122 of the comfort system 120, a third interface, 103 or IF3, configured to receive external data from the external sources 123, and a fourth interface, 104 or IF4, configured to receive sensor data indicative of the presence of one or more persons in one or more rooms of the building from the presence sensors 124. The interfaces 101-104 can be wireless or wired.

The data that are received via the interfaces 101-104 over the long term, meaning at least 24 hours but preferably multiple days, weeks, months or years, are stored in a database 105 that forms part of the control device 100. The database 105 will thus store historical data. The database can be installed on servers of the producer of the comfort system or in a cloud storage system that is managed by a third party, typically a cloud system operator.

A first machine learning module, 106 or ML1, is trained to generate personal preferred settings 108 per person and per room type using the historical data stored in database 105. A preferred setting 108 is a desired value for a parameter (sensor, apparatus, system or environmental parameter) in order to achieve a personal comfort preference in a given situation. The preferred setting 108 is typically a multidimensional reference point indicative of what a given person finds comfortable under certain surrounding circumstances such as the weather, the season, the day of the week, the time interval, etc. The preferred settings 108 are learnt by the machine learning module 106 per person and per room type. Thus, the first machine learning module 106 learns from the historical data stored in database 105, for example, that person 1, when they are present alone in the living room between 15:00 and 16:00 on a weekend day in October on which it will rain all day long, wants a temperature of 22.5°C in the living room and wants the bathroom to be warmed up because the person will probably take a shower there within the next half hour. The preferred settings 108 are preferably stored per person and per room type. Thus, while a person might have a preferred temperature of 23 degrees for the living room, the same person might have a preferred temperature of 18 degrees for the bedroom.

A second machine learning module, 107 or ML2, is trained to generate predictive models 109 using the historical data stored in database 105. A predictive model 109 is a formula that models the trend of a parameter (sensor, apparatus, system or environmental parameter) or models the trend of a personal preferred setting 108 so that future values of this parameter or preferred setting 108 can be predicted using this formula. The second machine learning module 107 will thus recognize patterns in the historical data and try to predict under which surrounding circumstances a user takes a certain action.

The control device 100 from Drawing 1 further includes a control unit 110 or controller which, on the basis of the preferred settings 108, the predictive models 109 and the current surrounding circumstances 115 pulled from the current sensor data obtained from the sensors 121, and/or the current operational settings obtained from the apparatuses 122, and/or the current external data obtained from the external sources 123, and/or the current presence data obtained from the presence sensors 124, adjusts the settings of one or more controllable apparatuses 122 in order to improve personal environmental comfort for users of the dwelling. The control device 100 will thus recurrently (continuously or regularly at fixed intervals or otherwise) control the settings of the controllable apparatuses 122 in the comfort system according to the preferred settings of the users of the building so that the users experience the desired personal environmental comfort as often as possible, considering the surrounding circumstances, without having to manually adjust the settings themselves. By virtue of the predictive models, the control unit 110 will have a predictive character and will also be able to adjust the settings of controllable apparatuses 122 in anticipation of what is expected to happen in the building, for example the arrival or departure of certain users, the use of certain rooms such as the bathroom or kitchen by certain users, etc.

For non-controllable apparatuses of the comfort system 120 such as, for example, an air vent above a window, or for apparatuses that do not form part of the comfort system 120 but do have an effect on environmental comfort, such as, for example, a non-actuable sunblind, the short-term recommendation module 111 will generate instructions. In embodiments of the control device according to the invention, the short-term recommendation module 111 can also be configured to generate instructions for controllable or actuable apparatuses that form part of the comfort system 120, for example in a phase in which the control unit 110 cannot yet be relied upon because the machine learning modules 106, 107 are insufficiently trained, as a result of which the preferred settings 108 and predictive models 109 are still rapidly changing. These instructions can be delivered to a user or administrator of the building in the form of electronic messages so that actions can be taken which will further contribute toward improving the personal environmental comfort of the users of the building.

The long-term recommendation module 112 will generate long-term recommendations for the administrator of the building to make certain investments which will further improve the personal environmental comfort of the users of the building, or which make it possible to reduce the energy consumption of the building while maintaining personal environmental comfort for the users of the building so that there is a return on the investments. The reminder module 113 will monitor whether the long-term recommendation is being followed by asking the administrator of the building.

The control device 100 from Drawing 1 further includes a restriction module 114 that imposes rule-based restrictions on the control unit 110 so as to avoid that the control unit 110 contravenes local regulations or the system can no longer perform measurements. The ventilation of buildings or rooms has to comply with regulations which are often country-specific. The locally applicable regulations are configured as rules by the producer or fitter of the comfort system which are used by the restriction module 114 to block adjustments to the settings of apparatuses 122 by the control unit 110 that go against the local regulations. The administrator or users of the building can also input rules which are imposed via the restriction module 114. Thus, for example, a user can indicate that a certain apparatus should not be operated, temporarily or otherwise, for example because it is being cleaned.

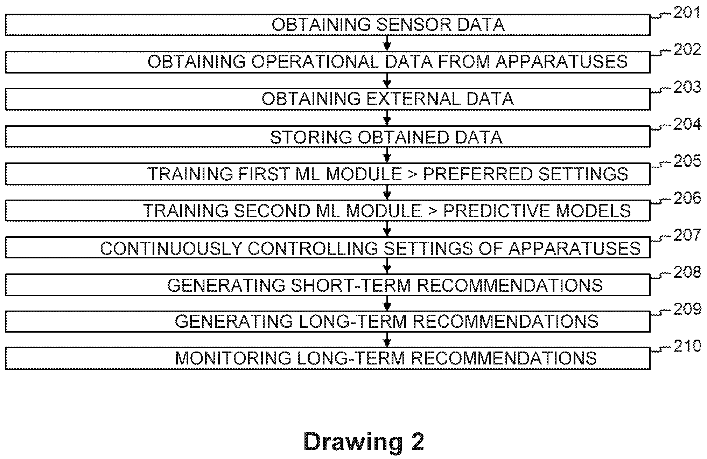

Drawing 2 is a pseudo flow diagram of the steps in one embodiment of the method for recurrently controlling the personal environmental comfort in a building. In step 201, sensor data are obtained from sensors in the comfort system of the building. In step 202, operational data or current settings are obtained from controllable apparatuses in the comfort system of the building. In step 203, external data are obtained from sources external to the comfort system of the building. The collected sensor data, operational data and external data are stored in a long-term database in step 204. A first machine learning module will use the stored data to generate profiles with preferred settings per user of the building and per room type, as indicated by step 205. A second machine learning module will use the stored data to generate predictive models, as indicated in step 206. The preferred settings and predictive models are then used in step 207 to recurrently control the settings of apparatuses in the comfort system for the benefit of the personal environmental comfort of the users of the building. For non-controllable apparatuses in the building which can contribute toward environmental comfort, short-term recommendations are generated in step 208. Long-term recommendations are also generated in step 209 in order to advise the administrator or a user of the building with respect to measures or investments that can be made for the benefit of personal environmental comfort and/or the energy consumption of the building. Which actions the administrator or user takes in response to the long-term recommendation is monitored in step 210. Although Drawing 2 shows steps 201-210 in sequence, it will be clear to a person skilled in the art that the steps of the method illustrated by Drawing 2 can be performed in parallel by different components of a control device for a comfort system.

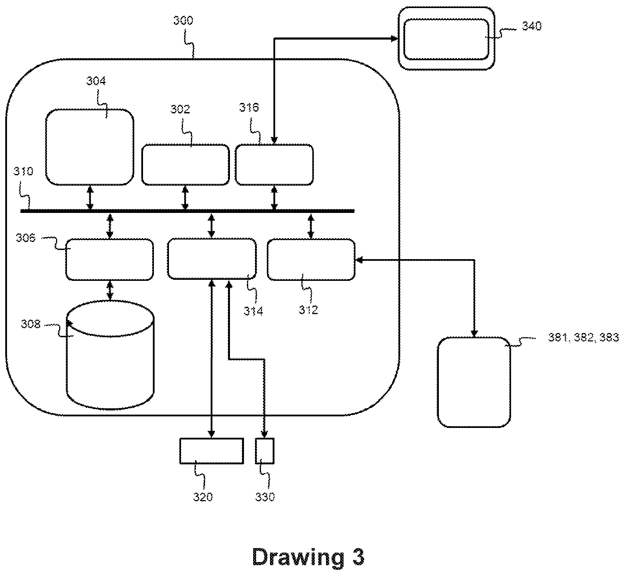

Drawing 3 shows a suitable computer system 300 for carrying out one or more steps in the method of the above one or more embodiments. Computer system 300 can generally take the form of a computer suitable for general purposes with a bus 310, a processor 302, a local memory 304, one or more optional input interfaces 314, one or more output interfaces 316, a communication interface 312, a storage element interface 306 and one or more storage elements 308. Bus 310 can comprise one or more conductors, which enable communication between the components of the computer system 300. Processor 302 can comprise any type of conventional processor or microprocessor which interprets and executes program instructions. Local memory 304 can comprise a random access memory (RAM) or another type of dynamic storage device which stores information and instructions for execution by processor 302, and/or a read-only memory (ROM) or another type of static storage device which stores static information and instructions for use by processor 302. Input interface 314 can comprise one or more conventional mechanisms which allow an operator to input information into the computer device 300, such as a keyboard 320, a mouse 330, a stylus, voice recognition and/or biometric mechanisms, a touchscreen, etc. Output interface 316 can comprise one or more conventional mechanisms which provide information to the operator, such as a display 340, a printer 350, a speaker, etc. Communication interface 312 can comprise a transceiver-type mechanism, such as for example one or more Ethernet interfaces, which allow the computer system 300 to communicate with other devices and/or systems 381, 382, 383, for example a transceiver for communicating with the comfort system 120 in Drawing 1. The communication interface 312 of computer system 300 can be connected to another computer system by means of a local area network (LAN) or a wide area network (WAN), such as for example the Internet. Storage element interface 306 can comprise a storage interface, such as for example a Serial Advanced Technology Attachment (SATA) interface or a Small Computer System Interface (SCSI), for connecting bus 310 with one or more storage elements 308, such as one or more local disks, for example SATA disk drives, and for reading and writing data to and/or from these storage elements 308. Although the storage elements 308 above are described as a local disk, in general any other suitable medium that can be read by computer, such as a removable magnetic disk, optical storage media, such as a CD or DVD, CD-ROM, solid-state drives, or flash memory cards, can be used. The system 300 described hereinabove can also operate as a virtual machine on top of the physical hardware.

The steps described in the above one or more embodiments can be implemented as program instructions, stored in the local memory 304 of the computer system 300, for execution by the processor 302 thereof. Alternatively, the instructions can be stored in the storage element 308 or be accessible from another computer system via the communication interface 312.

Although the present invention has been illustrated by means of specific embodiments, it will be clear to a person skilled in the art that the invention is not limited to the details of the above illustrative embodiments, and that the present invention can be carried out with various changes and modifications without thereby departing from the scope of the invention which is defined by the appending claims. Therefore, the present embodiments have to be seen in all areas as being illustrative and non-restrictive, and the area of application of the invention is described by the attached claims and not by the above description, and any changes which fall within the scope of the claims are therefore incorporated herein. In addition, the reader of this patent application will understand that the terms "comprising" or "comprise" do not exclude other elements or steps, that the term "a(n)/one" does not exclude the plural and that a single element, such as a computer system, a processor or another integrated unit, can perform the functions of various auxiliary means which are mentioned in the claims. The terms "first", "second", "third", "a", "b", "c" and the like, when used in the description or in the claims, are used to distinguish between similar elements or steps and do not necessarily indicate a sequential or chronological order. In the same way, the terms "top side", "bottom side", "above", "below" and the like are used for the sake of the description and do not necessarily refer to relative positions. It should be understood that these terms are interchangeable under the appropriate circumstances and that embodiments of the invention can function according to the present invention in different sequences or orientations than those described or illustrated above.

## Claims

1. A control device (100) for recurrently controlling the personal environmental comfort in a building with one or more rooms equipped with a comfort system (120), said control device (100) comprising:
- an interface (101) for obtaining sensor data from one or more sensors (121) in said comfort system (120);
- an interface (102) for obtaining operational data from one or more apparatuses (122) in said comfort system (120);
- an interface (103) for obtaining external data from one or more sources (123) external to said comfort system (120);
- a database (105) for storing said sensor data, said operational data and said external data, together referred to as stored data;
**characterized in that** said control device (100) also comprises the following:
- a first machine learning module (106) trained using said stored data in order to generate personal preferred settings (108) per person;
- a second machine learning module (107) trained using said stored data in order to generate predictive models (109) per room and/or per room type, wherein a predictive model (109) models the trend of a sensor datum, an operational datum, an external datum or a preferred setting in a formula that allows a future value thereof to be predicted; and
- a control unit (110) that, on the basis of said preferred settings (108) for one or more persons and/or said predictive models (109), adjusts one or more settings of one or more apparatuses (122) in said comfort system (120) in order to improve the personal environmental comfort for said one or more persons when present in said building.

2. The control device (100) as claimed in claim 1, further comprising:
- a short-term recommendation module (111) configured to generate, on the basis of said preferred settings (108) and said predictive models (109), a short-term recommendation for an apparatus from said comfort system (120), for a room from said building, or for said building, wherein said short-term recommendation comprises one or more instructions to adjust said one or more settings of one or more apparatuses within an interval of 24 hours.

3. The control device (100) as claimed in claim 1 or 2, further comprising:
- a long-term recommendation module (112) configured to generate, on the basis of said preferred settings (108) and said predictive models (109), a long-term recommendation for an apparatus from said comfort system (120), for a room from said building, or for said building.

4. The control device (100) as claimed in claim 3, further comprising:
- a reminder module (113), configured to check, via messages, whether said long-term recommendation is being followed.

5. The control device (100) as claimed in one of the preceding claims, further comprising:
- a restriction module (114) configured to impose one or more rule-based restrictions on said control unit (110), wherein a rule-based restriction restricts possible adjustment of said one or more settings of one or more apparatuses (122) in said comfort system (120).

6. The control device (100) as claimed in one of the preceding claims, further comprising:
- an interface (104) for obtaining sensor data indicative of the presence of a given person in a given room or in said building.

7. The control device (100) as claimed in one of the preceding claims, wherein said control unit (110) is configured to adjust, on the basis of the average of preferred settings for multiple persons, one or more settings of one or more apparatuses (122) in said comfort system (120) in order to improve the personal environmental comfort for said multiple persons when present in said building.

8. The control device (100) as claimed in one of the preceding claims, wherein said control unit (110) is configured to compare an adjustment of a setting obtained on the basis of said predictive models with a preferred setting and to implement said adjustment only when the difference with respect to said preferred setting exceeds a predefined threshold.

9. The control device (100) as claimed in one of the preceding claims, wherein said control unit (110) is configured to implement an adjustment of a setting with a delay.

10. The control device (100) as claimed in claim 9, wherein said delay is a personal preferred setting.

11. The control device (100) as claimed in one of the preceding claims, wherein said comfort system (120) comprises a ventilation system.

12. The control device (100) as claimed in one of the preceding claims, wherein said comfort system (120) comprises a sunblind system.

13. A computer-implemented method for recurrently controlling the personal environmental comfort in a building with one or more rooms equipped with a comfort system (120), said method comprising:
- obtaining (201) sensor data from one or more sensors (121) in said comfort system (120);
- obtaining (202) operational data from one or more apparatuses (122) in said comfort system (120);
- obtaining (203) external data from one or more sources (123) external to said comfort system (120);
**characterized in that** said method also comprises the following:
- storing (204) said sensor data, said operational data and said external data in a database (105), said data together referred to as stored data;
- training (205) a first machine learning module (106) using said stored data in order to generate personal preferred settings (108) per person;
- training (206) a second machine learning module (107) using said stored data in order to generate predictive models (109) per room and/or per room type, wherein a predictive model (109) models the trend of a sensor datum, an operational datum, an external datum or a preferred setting in a formula that allows a future value thereof to be predicted; and
- adjusting (207) one or more settings of one or more apparatuses (122) in said comfort system (120) on the basis of said preferred settings (108) for one or more persons and/or said predictive models (109) in order to improve the personal environmental comfort for said one or more persons when present in said building.

14. A computer program product comprising instructions that can be executed on a computer in order to carry out the following steps, if said program is executed on a computer, for recurrently controlling the personal environmental comfort in a building with one or more rooms equipped with a comfort system:
- obtaining (201) sensor data from one or more sensors (121) in said comfort system (120);
- obtaining (202) operational data from one or more apparatuses (122) in said comfort system (120);
- obtaining (203) external data from one or more sources (123) external to said comfort system (120);
**characterized in that** said computer program product also comprises instructions that can be executed on a computer in order to carry out the following steps **:**
- storing (204) said sensor data, said operational data and said external data in a database (105), said data together referred to as stored data;
- training (205) a first machine learning module (106) using said stored data in order to generate personal preferred settings (108) per person;
- training (206) a second machine learning module (107) using said stored data in order to generate predictive models (109) per room and/or per room type, wherein a predictive model (109) models the trend of a sensor datum, an operational datum, an external datum or a preferred setting in a formula that allows a future value thereof to be predicted; and
- adjusting (207) one or more settings of one or more apparatuses (122) in said comfort system (120) on the basis of said preferred settings (108) for one or more persons and/or said predictive models (109) in order to improve the personal environmental comfort for said one or more persons when present in said building.

15. A computer-readable storage medium comprising the computer program product as claimed in claim 14.

## Patentansprüche

1. Steuerungsvorrichtung (100) zur wiederholten Steuerung des persönlichen Umgebungskomforts in einem Gebäude mit einem oder mehreren Räumen, die mit einem Komfortsystem (120) ausgestattet sind, wobei die Steuerungsvorrichtung (100) Folgendes umfasst:
- eine Schnittstelle (101) zum Erhalten von Sensordaten von einem oder mehreren Sensoren (121) in dem Komfortsystem (120);
- eine Schnittstelle (102) zum Erhalten von Betriebsdaten von einer oder mehreren Einrichtungen (122) in dem Komfortsystem (120);
- eine Schnittstelle (103) zum Erhalten von externen Daten von einer oder mehreren Quellen (123) extern zu dem Komfortsystem (120);
- eine Datenbank (105) zum Speichern der Sensordaten, der Betriebsdaten und der externen Daten, die gemeinsam als gespeicherte Daten bezeichnet werden;
**dadurch gekennzeichnet, dass** die Steuerungsvorrichtung (100) außerdem Folgendes umfasst:
- ein erstes Modul (106) des maschinellen Lernens, das unter Verwendung der gespeicherten Daten trainiert wird, um persönliche bevorzugte Einstellungen (108) je nach Person zu generieren;
- ein zweites Modul (107) des maschinellen Lernens, das unter Verwendung der gespeicherten Daten trainiert wird, um Vorhersagemodelle (109) je nach Raum und/oder je nach Raumart zu generieren, wobei ein Vorhersagemodell (109) den Trend eines Sensordatums, eines Betriebsdatums, eines externen Datums oder einer bevorzugten Einstellung in einer Formel modelliert, die es ermöglicht, einen zukünftigen Wert davon vorherzusagen; und
- eine Steuerungseinheit (110), die auf Grundlage der bevorzugten Einstellungen (108) für eine oder mehrere Personen und/oder der Vorhersagemodelle (109) eine oder mehrere Einstellungen einer oder mehrerer Einrichtungen (122) in dem Komfortsystem (120) anpasst, um den persönlichen Umgebungskomfort für die eine oder mehreren Personen zu verbessern, wenn sie sich in dem Gebäude befinden.

2. Steuerungsvorrichtung (100) nach Anspruch 1, ferner umfassend:
- ein Kurzzeitempfehlungsmodul (111), das dazu konfiguriert ist, auf Grundlage der bevorzugten Einstellungen (108) und der Vorhersagemodelle (109) eine Kurzzeitempfehlung für eine Einrichtung des Komfortsystems (120), für einen Raum des Gebäudes oder für das Gebäude zu generieren, wobei die Kurzzeitempfehlung eine oder mehrere Anweisungen zum Anpassen der einen oder mehreren Einstellungen einer oder mehreren Einrichtungen innerhalb eines Intervalls von 24 Stunden umfasst.

3. Steuerungsvorrichtung (100) nach Anspruch 1 oder 2, ferner umfassend:
- ein Langzeitempfehlungsmodul (112), das dazu konfiguriert ist, auf Grundlage der bevorzugten Einstellungen (108) und der Vorhersagemodelle (109) eine Langzeitempfehlung für eine Einrichtung des Komfortsystems (120), für einen Raum des Gebäudes oder für das Gebäude zu generieren.

4. Steuerungsvorrichtung (100) nach Anspruch 3, ferner umfassend:
- ein Erinnerungsmodul (113), das dazu konfiguriert ist, über Nachrichten zu prüfen, ob die langfristige Empfehlung befolgt wird.

5. Steuerungsvorrichtung (100) nach einem der vorhergehenden Ansprüche, ferner umfassend:
- ein Einschränkungsmodul (114), das dazu konfiguriert ist, der Steuerungseinheit (110) eine oder mehrere regelbasierte Einschränkungen aufzuerlegen, wobei eine regelbasierte Einschränkung eine mögliche Anpassung der einen oder mehreren Einstellungen einer oder mehrerer Einrichtungen (122) in dem Komfortsystem (120) einschränkt.

6. Steuerungsvorrichtung (100) nach einem der vorhergehenden Ansprüche, ferner umfassend:
- eine Schnittstelle (104) zum Erhalten von Sensordaten, die auf die Anwesenheit einer gegebenen Person in einem gegebenen Raum oder in dem Gebäude hinweisen.

7. Steuerungsvorrichtung (100) nach einem der vorhergehenden Ansprüche, wobei die Steuerungseinheit (110) dazu konfiguriert ist, auf Grundlage des Durchschnitts bevorzugter Einstellungen für mehrere Personen eine oder mehrere Einstellungen einer oder mehrerer Einrichtungen (122) in dem Komfortsystem (120) anzupassen, um den persönlichen Umgebungskomfort für die mehreren Personen zu verbessern, wenn sie sich in dem Gebäude befinden.

8. Steuerungsvorrichtung (100) nach einem der vorhergehenden Ansprüche, wobei die Steuerungseinheit (110) dazu konfiguriert ist, eine Anpassung einer auf Grundlage der Vorhersagemodelle erhaltenen Einstellung mit einer bevorzugten Einstellung zu vergleichen und die Anpassung nur dann umzusetzen, wenn die Differenz in Bezug auf die bevorzugte Einstellung einen vordefinierten Schwellenwert überschreitet.

9. Steuerungsvorrichtung (100) nach einem der vorhergehenden Ansprüche, wobei die Steuerungseinheit (110) dazu konfiguriert ist, eine Anpassung einer Einstellung mit einer Verzögerung umzusetzen.

10. Steuerungsvorrichtung (100) nach Anspruch 9, wobei die Verzögerung eine persönliche bevorzugte Einstellung ist.

11. Steuerungsvorrichtung (100) nach einem der vorhergehenden Ansprüche, wobei das Komfortsystem (120) ein Belüftungssystem umfasst.

12. Steuerungsvorrichtung (100) nach einem der vorhergehenden Ansprüche, wobei das Komfortsystem (120) ein Sonnenschutzsystem umfasst.

13. Computerimplementiertes Verfahren zur wiederholten Steuerung des persönlichen Umgebungskomforts in einem Gebäude mit einem oder mehreren Räumen, die mit einem Komfortsystem (120) ausgestattet sind, wobei das Verfahren Folgendes umfasst:
- Erhalten (201) von Sensordaten von einem oder mehreren Sensoren (121) in dem Komfortsystem (120);
- Erhalten (202) von Betriebsdaten von einer oder mehreren Einrichtungen (122) in dem Komfortsystem (120);
- Erhalten (203) von externen Daten von einer oder mehreren Quellen (123) extern zu dem Komfortsystem (120);
**dadurch gekennzeichnet, dass** das Verfahren außerdem Folgendes umfasst:
- Speichern (204) der Sensordaten, der Betriebsdaten und der externen Daten in einer Datenbank (105), wobei die Daten gemeinsam als gespeicherte Daten bezeichnet werden;
- Trainieren (205) eines ersten Moduls (106) des maschinellen Lernens unter Verwendung der gespeicherten Daten, um persönliche bevorzugte Einstellungen (108) je nach Person zu generieren;
- Trainieren (206) eines zweiten Moduls (107) des maschinellen Lernens unter Verwendung der gespeicherten Daten, um Vorhersagemodelle (109) je nach Raum und/oder je nach Raumart zu generieren, wobei ein Vorhersagemodell (109) den Trend eines Sensordatums, eines Betriebsdatums, eines externen Datums oder einer bevorzugten Einstellung in einer Formel modelliert, die es ermöglicht, einen zukünftigen Wert davon vorherzusagen; und
- Anpassen (207) einer oder mehrerer Einstellungen einer oder mehrerer Einrichtungen (122) in dem Komfortsystem (120) auf Grundlage der bevorzugten Einstellungen (108) für eine oder mehrere Personen und/oder der Vorhersagemodelle (109), um den persönlichen Umgebungskomfort für die eine oder mehreren Personen zu verbessern, wenn sie sich in dem Gebäude befinden.

14. Computerprogrammprodukt, umfassend Anweisungen, die auf einem Computer ausgeführt werden können, um die folgenden Schritte durchzuführen, wenn das Programm auf einem Computer ausgeführt wird, um den persönlichen Umgebungskomfort in einem Gebäude mit einem oder mehreren Räumen, die mit einem Komfortsystem ausgestattet sind, wiederholt zu steuern:
- Erhalten (201) von Sensordaten von einem oder mehreren Sensoren (121) in dem Komfortsystem (120);
- Erhalten (202) von Betriebsdaten von einer oder mehreren Einrichtungen (122) in dem Komfortsystem (120);
- Erhalten (203) von externen Daten von einer oder mehreren Quellen (123) extern zu dem Komfortsystem (120);
**dadurch gekennzeichnet, dass** das Computerprogrammprodukt außerdem Anweisungen umfasst, die auf einem Computer ausgeführt werden können, um die folgenden Schritte durchzuführen:
- Speichern (204) der Sensordaten, der Betriebsdaten und der externen Daten in einer Datenbank (105), wobei die Daten gemeinsam als gespeicherte Daten bezeichnet werden;
- Trainieren (205) eines ersten Moduls (106) des maschinellen Lernens unter Verwendung der gespeicherten Daten, um persönliche bevorzugte Einstellungen (108) je nach Person zu generieren;
- Trainieren (206) eines zweiten Moduls (107) des maschinellen Lernens unter Verwendung der gespeicherten Daten, um Vorhersagemodelle (109) je nach Raum und/oder je nach Raumart zu generieren, wobei ein Vorhersagemodell (109) den Trend eines Sensordatums, eines Betriebsdatums, eines externen Datums oder einer bevorzugten Einstellung in einer Formel modelliert, die es ermöglicht, einen zukünftigen Wert davon vorherzusagen; und
- Anpassen (207) einer oder mehrerer Einstellungen einer oder mehrerer Einrichtungen (122) in dem Komfortsystem (120) auf Grundlage der bevorzugten Einstellungen (108) für eine oder mehrere Personen und/oder der Vorhersagemodelle (109), um den persönlichen Umgebungskomfort für die eine oder mehreren Personen zu verbessern, wenn sie sich in dem Gebäude befinden.

15. Computerlesbares Speichermedium, umfassend das Computerprogrammprodukt nach Anspruch 14.

## Revendications

1. Dispositif de commande (100) pour commander de manière récurrente le confort environnemental personnel dans un immeuble comportant une ou plusieurs pièces équipées d'un système de confort (120), ledit dispositif de commande (100) comprenant :
- une interface (101) pour obtenir des données de capteur provenant d'un ou plusieurs capteurs (121) dans ledit système de confort (120) ;
- une interface (102) pour obtenir des données fonctionnelles provenant d'un ou plusieurs appareils (122) dans ledit système de confort (120) ;
- une interface (103) pour obtenir des données externes provenant d'une ou plusieurs sources (123) externes audit système de confort (120) ;
- une base de données (105) pour stocker lesdites données de capteur, lesdites données fonctionnelles et lesdites données externes, désignées ensemble sous le nom de données stockées ;
**caractérisé en ce que** ledit dispositif de commande (100) comprend également les suivants :
- un premier module d'apprentissage automatique (106) entraîné à l'aide desdites données stockées afin de générer des réglages préférés personnels (108) par personne ;
- un second module d'apprentissage automatique (107) entraîné à l'aide desdites données stockées afin de générer des modèles prédictifs (109) par pièce et/ou par type de pièce, un modèle prédictif (109) modélisant la tendance des données de capteur, des données fonctionnelles, des données externes ou d'un réglage préféré dans une formule qui permet de prédire une valeur future de celles-ci ; et
- une unité de commande (110) qui, sur la base desdits réglages préférés (108) pour une ou plusieurs personnes et/ou lesdits modèles prédictifs (109), ajuste un ou plusieurs réglages d'un ou plusieurs appareils (122) dans ledit système de confort (120) afin d'améliorer le confort environnemental personnel pour ladite ou lesdites personnes lorsqu'elles sont présentes dans ledit bâtiment.

2. Dispositif de commande (100) selon la revendication 1, comprenant en outre :
- un module de recommandation à court terme (111) configuré pour générer, sur la base desdits réglages préférés (108) et desdits modèles prédictifs (109), une recommandation à court terme pour un appareil provenant dudit système de confort (120), pour une pièce provenant dudit bâtiment, ou pour ledit bâtiment, ladite recommandation à court terme comprenant une ou plusieurs instructions pour ajuster ledit ou lesdits réglages d'un ou plusieurs appareils dans un intervalle de 24 heures.

3. Dispositif de commande (100) selon la revendication 1 ou 2, comprenant en outre :
- un module de recommandation à long terme (112) configuré pour générer, sur la base desdits réglages préférés (108) et desdits modèles prédictifs (109), une recommandation à long terme pour un appareil à partir dudit système de confort (120), pour une pièce dudit bâtiment, ou pour ledit bâtiment.

4. Dispositif de commande (100) selon la revendication 3, comprenant en outre :
- un module de rappel (113), configuré pour vérifier, par l'intermédiaire de messages, si ladite recommandation à long terme est suivie.

5. Dispositif de commande (100) selon l'une des revendications précédentes, comprenant en outre :
- un module de restriction (114) configuré pour imposer une ou plusieurs restrictions basées sur des règles à ladite unité de commande (110), une restriction basée sur des règles limite un ajustement possible dudit ou desdits réglages d'un ou plusieurs appareils (122) dans ledit système de confort (120).

6. Dispositif de commande (100) selon l'une des revendications précédentes, comprenant en outre :
- une interface (104) pour obtenir des données de capteur indiquant la présence d'une personne donnée dans une pièce donnée ou dans ledit bâtiment.

7. Dispositif de commande (100) selon l'une des revendications précédentes, ladite unité de commande (110) étant configurée pour ajuster, sur la base de la moyenne des réglages préférés pour de multiples personnes, un ou plusieurs réglages d'un ou plusieurs appareils (122) dans ledit système de confort (120) afin d'améliorer le confort environnemental personnel pour lesdites multiples personnes lorsqu'elles sont présentes dans ledit bâtiment.

8. Dispositif de commande (100) selon l'une des revendications précédentes, ladite unité de commande (110) étant configurée pour comparer un ajustement d'un réglage obtenu sur la base desdits modèles prédictifs avec un réglage préféré et pour mettre en œuvre ledit ajustement uniquement lorsque la différence par rapport audit réglage préféré dépasse un seuil prédéfini.

9. Dispositif de commande (100) selon l'une des revendications précédentes, ladite unité de commande (110) étant configurée pour mettre en œuvre un ajustement d'un réglage avec un retard.

10. Dispositif de commande (100) selon la revendication 9, ledit retard étant un ajustement préféré personnel.

11. Dispositif de commande (100) selon l'une des revendications précédentes, ledit système de confort (120) comprenant un système de ventilation.

12. Dispositif de commande (100) selon l'une des revendications précédentes, ledit système de confort (120) comprenant un système de stores pare-soleil.

13. Procédé mis en œuvre par ordinateur permettant de commander de manière récurrente le confort environnemental personnel dans un immeuble comportant une ou plusieurs pièces équipées d'un système de confort (120), ledit procédé comprenant :
- l'obtention (201) de données de capteur provenant d'un ou plusieurs capteurs (121) dans ledit système de confort (120) ;
- l'obtention (202) de données fonctionnelles provenant d'un ou plusieurs appareils (122) dans ledit système de confort (120) ;
- l'obtention (203) de données externes provenant d'une ou plusieurs sources (123) externes audit système de confort (120) ;
**caractérisé en ce que** ledit procédé comprend également les suivants :
- le stockage (204) desdites données de capteur, desdites données fonctionnelles et desdites données externes dans une base de données (105), lesdites données étant désignées ensemble sous le nom de données stockées ;
- l'entraînement (205) d'un premier module d'apprentissage automatique (106) à l'aide desdites données stockées afin de générer des réglages préférés personnels (108) par personne ;
- l'entraînement (206) d'un second module d'apprentissage automatique (107) à l'aide desdites données stockées afin de générer des modèles prédictifs (109) par pièce et/ou par type de pièce, un modèle prédictif (109) modélisant la tendance des données de capteur, des données fonctionnelles, des données externes ou d'un réglage préféré dans une formule qui permet de prédire une valeur future de celles-ci ; et
- l'ajustement (207) d'un ou plusieurs réglages d'un ou plusieurs appareils (122) dans ledit système de confort (120) sur la base desdits réglages préférés (108) pour une ou plusieurs personnes et/ou lesdits modèles prédictifs (109) afin d'améliorer le confort environnemental personnel pour ladite ou lesdites personnes lorsqu'elles sont présentes dans ledit bâtiment.

14. Produit-programme informatique comprenant des instructions pouvant être exécutées sur un ordinateur afin d'effectuer les étapes suivantes, si ledit programme est exécuté sur un ordinateur, pour commander de manière récurrente le confort environnemental personnel dans un immeuble comportant une ou plusieurs pièces équipées d'un système de confort :
- l'obtention (201) de données de capteur provenant d'un ou plusieurs capteurs (121) dans ledit système de confort (120) ;
- l'obtention (202) de données fonctionnelles provenant d'un ou plusieurs appareils (122) dans ledit système de confort (120) ;
- l'obtention (203) de données externes provenant d'une ou plusieurs sources (123) externes audit système de confort (120) ;
**caractérisé en ce que** ledit produit-programme informatique comprend également des instructions qui peuvent être exécutées sur un ordinateur afin d'effectuer les étapes suivantes :
- le stockage (204) desdites données de capteur, desdites données fonctionnelles et desdites données externes dans une base de données (105), lesdites données étant désignées ensemble sous le nom de données stockées ;
- l'entraînement (205) d'un premier module d'apprentissage automatique (106) à l'aide desdites données stockées afin de générer des réglages préférés personnels (108) par personne ;
- l'entraînement (206) d'un second module d'apprentissage automatique (107) à l'aide desdites données stockées afin de générer des modèles prédictifs (109) par pièce et/ou par type de pièce, un modèle prédictif (109) modélisant la tendance des données de capteur, des données fonctionnelles, des données externes ou d'un réglage préféré dans une formule qui permet de prédire une valeur future de celles-ci ; et
- l'ajustement (207) d'un ou plusieurs réglages d'un ou plusieurs appareils (122) dans ledit système de confort (120) sur la base desdits réglages préférés (108) pour une ou plusieurs personnes et/ou lesdits modèles prédictifs (109) afin d'améliorer le confort environnemental personnel pour ladite ou lesdites personnes lorsqu'elles sont présentes dans ledit bâtiment.

15. Support de stockage lisible par ordinateur comprenant le produit-programme informatique selon la revendication 14.
